# EUROPÄISCHE PATENTSCHRIFT

(11) **EP 1 083 179 B1**
(45) Veröffentlichungstag und Bekanntmachung des Hinweises auf die Patenterteilung: **09.04.2003**
(21) Anmeldenummer: 00118134.6
(22) Anmeldetag: 28.08.2000
(51) Int. Cl.: C07F 7/08

(54) **Hydrolysierbare und polymerisierbare Silane auf der Basis von Methylendithiepan**
Hydrolysable and polymerisable silanes on the basis of methylenedithiepane
Silanes hydrolysables et polymérisables à base de méthylèndithiepane

(30) Priorität: 08.09.1999 DE 19943712
(43) Veröffentlichungstag der Anmeldung: 14.03.2001
(73) Patentinhaber: Ivoclar Vivadent AG, 9494 Schaan (LI)
(72) Erfinder: Moszner, Norbert, 9492 Eschen (LI); Stein, Sabine, 6710 Nenzing (AT); Völkel, Thomas, 88131 Oberreitnau (DE); Rheinberger, Volker, Dr., 9490 Vaduz (LI)
(74) Vertreter: UEXKÜLL & STOLBERG

(56) Entgegenhaltungen:
- WO-A-96/19471
- US-A- 5 397 824

## Beschreibung

Die Erfindung betrifft Silane auf der Basis von Methylendithiepan, die sich insbesondere zur Herstellung von Dentalmaterialien eignen.

Hydrolysierbare Silane, die polymerisierbare organische Reste enthalten, finden bei der Herstellung von Beschichtungen, partikulären Füllstoffen, Klebemassen und monolithischen Formkörpern sowie bei der Oberflächenmodifizierung von Verstärkungsstoffen Anwendung. Dabei werden die Silane allein, in Mischung mit anderen Silanen oder in Gegenwart von anderen Metallalkoxiden hydrolytisch kondensiert und thermisch, photochemisch oder redoxinitiiert polymerisiert, d.h. gehärtet.

Im Zusammenhang mit der Herstellung von organisch-anorganischen Verbundmaterialien sind vor allem organisch-modifizierte Silane mit polymerisationsfähigen organischen Gruppen, wie Vinyl-, (Meth)acryl-, Allyl- oder Styryl-Gruppen von besonderem Interesse, da sie den simultanen oder konsekutiven Aufbau sowohl eines anorganischen als auch eines organischen Netzwerkes und damit von Verbundmaterialien mit maßgeschneiderten Eigenschaften gestatten (vgl. H. Schmidt, Mat. Res. Soc. Symp. Proc. Vol. 32 (1984), 327-335; H. Schmidt, H. Wolter, J. Non-Cryst. Solids 121 (1990), 428-435). Dabei werden die polymerisationsfähigen Silane in der Regel zunächst in Lösung hydrolytisch kondensiert. Nach Zugabe von thermischem Initiator oder Photoinitiator und Abtrennung des Lösungsmittels bilden sich dann nanopartikuläre Harze, die nach Formgebung polymerisiert und damit gehärtet werden.

Ein wesentlicher Nachteil dieser Materialien liegt darin, daß die bei der Polymerisation erfolgende Ausbildung des organischen Netzwerkes meist von einer beträchtlichen Volumenkontraktion begleitet ist, die zur Deformation der Formkörper, zur Verminderung der Substrathaftung, zur Schichtentrennung, zur Ausbildung von Hohlräumen oder zur Ausbildung von Materialspannungen führen kann. Eine verringerte Volumenkontraktion erfolgt bei Silanen, die ringöffnende Gruppen tragen. In diesem Zusammenhang beschreiben die EP 0 358 011 A2 kratzfeste Materialien u.a. auf der Basis von 3-Glycidyloxypropylsilanen und die EP 0 486 469 A1 organisch-anorganische Hybridpolymere von 3-Glycidyloxypropylsilanen.

Weiterhin sind Dentalmaterialien auf Basis polymerisationsfähiger Silane bekannt. Die DE 36 10 804 A1 offenbart Dentalharzmassen, die Siloxanpolymere, mit dem Siloxanpolymeren copolymerisierbare Monomere und einen Polymerisationskatalysator enthalten. Die Dentalharzmassen sollen nach der Polymerisation eine verbesserte Druckfestigkeit, Abriebbeständigkeit und Biegefestigkeit aufweisen.

Die DE 34 07 087 A1 und WO 92/16183 betreffen die Verwendung von Zusammensetzungen auf der Basis von organisch modifizierten Kieselsäurepolykondensaten zur Beschichtung von Zähnen und Zahnersatzteilen. Die gehärteten Überzüge sollen gegenüber der Anlagerung von Plaque resistent sein.

Aus der DE 41 33 494 sind Dentalharzmassen auf der Basis von polymerisierbaren Polysiloxanen bekannt, die durch hydrolytische Kondensation von Silane mit 1,4,6-Trioxaspiro-[4,4]-nonan-Resten erhalten werden. Silane mit Orthoestergruppen sind schwierig zugänglich und wenig lagerstabil. Außerdem lassen sich Silane mit Epoxid- oder Spiroorthoester-Gruppen nur kationisch polymerisieren, was den Ausschluß von Feuchtigkeit erforderlich macht. Zudem läuft die Polymerisation der Epoxidsilane erst bei erhöhten Temperaturen hinreichend schnell ab.

Die DE 196 19 046 offenbart schrumpfungsarme polymerisierbare Zusammensetzungen auf der Basis von Mercapto- oder Norbornensilanen und einem Reaktionspartner für die En-Thiol-Polymerisation.

Die DE 197 14 320 A1 betrifft Dentalmaterialien auf der Basis von Vinylcyclopropansilanen und die DE 197 14 324 A1 Dentalmaterialien auf der Basis von Oxetansilanen.

Weiterhin sind aus der WO 96/19471 methylendithiepangruppenhaltige Monomere, wie z.B. Dimethyldi-[2-(6-methylen-1,4-dithiepan)methoxy]silan (DMTEPS), bekannt, die sich unter Ringöffnung radikalisch polymerisieren lassen. DMTEPS enthält keine hydrolysierbaren Gruppen, die eine hydrolytische Kondensation unter Ausbildung von Polysiloxanen erlauben würden. Vielmehr werden bei der Hydrolyse die Dithiepanreste abgespalten.

Aufgabe der Erfindung ist die Bereitstellung von Silanen auf der Basis von Methylendithiepan, die sich in organisch-anorganische Verbundmaterialien kovalent einbauen lassen, sich bei Raumtemperatur mit hoher Geschwindigkeit polymerisieren lassen und nur einen geringen Schrumpf bei der Polymerisation zeigen.

Die Aufgabe wird durch Silane gemäß der Formel (I) gelöst, die mindestens eine Methylendithepangruppe enthalten: 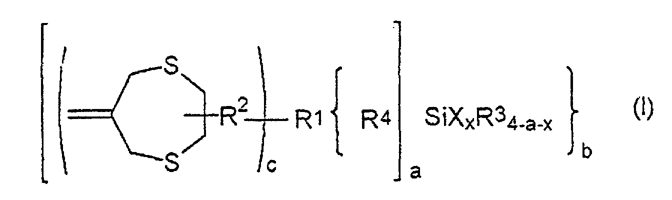
- R¹ =: ein gesättigter oder ungesättigter aliphatischer oder alicyclischer Kohlenwasserstoffrest mit 1 bis 10 Kohlenstoffatomen, der durch ein oder mehrere Sauerstoffund/oder Schwefelatome unterbrochen sein und eine oder mehrere Ester-, Carbonyl-, Amid- und/oder Urethangruppen enthalten kann, oder ein aromatischer oder heteroaromatischer Kohlenwasserstoffrest mit 6 bis 18 Kohlenstoffatomen und ggf. einem oder mehrerern, vorzugsweise einem oder zwei Heteroatomen, vorzugsweise S-, O- und/oder N-Atomen;
- R² =: eine der für R¹ angegebenen Bedeutungen oder entfällt;
- R³ =: eine der für R¹ angegebenen Bedeutungen oder entfällt;
- R⁴: = -(CHR⁶)ₙ-, -Y-CO-NH-(CHR⁶)ₙ-, -Y-CO-NH-R⁵-, -(CHR⁶)ₙ-S-R⁵-, -S-R⁵-, -CO-O-R⁵- oder entfällt, wobei n = 1 bis 4 ist, R⁶ = Wasserstoff, C₁- bis C₁₀-Alkyl- oder C₆- bis C₁₀-Aryl ist, R⁵ eine der für R¹ angegebenen Bedeutungen hat und Y ein O- oder S-Atom bedeutet oder entfällt;
- X =: eine hydrolysierbare Gruppe;
a, b, c und x sind jeweils unabhängig voneinander 1, 2 oder 3; wobei die Summe von a + x = bis 4 ist.

Vorzugsweise ist b gleich 1 wenn a größer als 1 ist und a gleich 1 wenn b größer als 1 ist.

Die Kohlenwasserstoffreste umfassen auch Alkylarylreste, wie z.B. CH₃-Ph-, Arylalkylengruppen, wie z.B. >CH-Ph, und Arylenalkylenreste, wie z.B. -CH₂-Ph- oder >CH-Ph-CH<, wobei Kohlenwasserstoffreste mit C₇- bis C₁₈-C-Atomen bevorzugt sind.

In der gesamten Beschreibung sowie den Ansprüchen werden unter Alkyl geradkettige, verzweigte oder cyclische Reste verstanden, die vorzugsweise 1 bis 12 Kohlenstoffatome, besonders bevorzugt 1 bis 8 Kohlenstoffatome und ganz besonders bevorzugt 1 bis 4 Kohlenstoffatome enthalten. Spezielle Beispiele für mögliche Alkylgruppen sind Methyl, Ethyl, n-Propyl, iso-Propyl, sec.-Butyl, tert.-Butyl, n-Pentyl, Cyclohexyl, 2-Ethylhexyl und Octadecyl.

Mit Aryl sind Reste, Gruppen oder Substituenten gemeint, die vorzugsweise 6 bis 10 Kohlenstoffatome aufweisen und wie vorstehend angegeben substituiert sein können. Bevorzugte Arylgruppen sind Phenyl, Biphenyl und Naphthyl.

Die Alkoxy- und Acyloxygruppen leiten sich von den oben genannte Alkyl- und Arylresten ab. Spezielle Beispiele sind Methoxy, Ethoxy, n-Propyl, iso-Propyl, tert.-Butyloxy, Acetyloxy, Acetyl, Benzyl, 2-Phenylethyl und Tolyl.

Die oben genannten Reste und Gruppen können unsubstituiert sein oder einen oder mehrere Substituenten tragen, insbesondere Alkyl, Aryl, Halogen, vorzugsweise Chlor, Hydroxy, Alkoxy, Hydroxyalkyl, Carboxy, -SO₃H, -PO₃H₂ und/oder -PO₄H₂.

Die bei den Resten möglicherweise vorhandenen Ester-, Carbonyl-, Amid- und Urethangruppen sind durch die folgenden Formeln definiert: -CO-O-, -O-CO-, -CO-, -CO-NH-, -NH-CO-, -O-CO-NH-, -NH-CO-O-. Die Gruppen können in die Reste integriert oder endständig gebunden sein.

Unabhängig voneinander wählbare bevorzugte Definitionen für die einzelnen Variablen sind:
- R¹ =: ein gesättigter oder ungesättigter aliphatischer oder alicyclischer Kohlenwasserstoffrest mit 1 bis 8 Kohlenstoffatomen, der durch Sauerstoff- oder Schwefelatome, Ester-, Carbonyl-, Amid- und/oder Urethangruppen unterbrochen sein kann, oder ein aromatischer Kohlenwasserstoffrest mit 6 bis 10 Kohlenstoffatomen; insbesondere ein gesättigter oder ungesättigter aliphatischer oder alicyclischer Kohlenwasserstoffrest mit 1 bis 6 Kohlenstoffatomen oder ein aromatischer Kohlenwasserstoffrest mit 6 bis 10 Kohlenstoffatomen;
- R² =: ein gesättigter oder ungesättigter aliphatischer oder alicyclischer Kohlenwasserstoffrest mit 1 bis 8 Kohlenstoffatomen, der durch Sauerstoff- oder Schwefelatome, Ester-, Carbonyl-, Amid- und/oder Urethangruppen unterbrochen sein kann, oder ein aromatischer Kohlenwasserstoffrest mit 6 bis 10 Kohlenstoffatomen; insbesondere ein gesättigter oder ungesättigter aliphatischer Kohlenwasserstoffrest mit 1 bis 4 Kohlenstoffatomen, der ein Sauerstoffatom oder eine Estergruppe enthalten kann, oder entfällt;
- R³ =: ein gesättigter oder ungesättigter aliphatischer oder alicyclischer Kohlenwasserstoffrest mit 1 bis 8 Kohlenstoffatomen, der durch Sauerstoff- oder Schwefelatome, Ester-, Carbonyl-, Amid- und/oder Urethangruppen unterbrochen sein kann, oder ein aromatischer Kohlenwasserstoffrest mit 6 bis 10 Kohlenstoffatomen; insbesondere eine Methy-, Ethyl- und/oder Phenylgruppe oder entfällt;

- R⁴ =: -(CHR⁶)ₙ-, -Y-CO-NH-(CHR⁶)ₙ-, -Y-CO-NH-R⁵-, -S-R⁵-, -CO-O-R⁵- oder entfällt, wobei n = 1 bis 3 ist, R⁶ = Wasserstoff oder C₁- bis C₄-Alkyl- ist, R⁵ eine der für R¹ angegebenen, insbesondere der bevorzugten Bedeutungen hat und Y ein O- oder S-Atom bedeutet oder entfällt, insbesondere -(CH₂)ₙ- oder -Y-CO-NH-(CH₂)ₙ-, wobei n = 1 bis 3 ist, und Y ein O- Atom bedeutet oder entfällt;
- X =: Halogen, Hydroxy, C₁- bis C₃-Alkoxy oder C₁- bis C₃- Acyloxy; insbesondere Methoxy, Ethoxy oder Chlor;
- a =: 1;
- b =: 1 oder 2;
- c =: 1 oder 2; und/oder
- x =: 2 oder 3.

Der 1,4-Dithiepanring des Silans ist vorzugsweise in Position 2 oder 3 substituiert.

Bevorzugte Ausführungsformen der erfindungsgemäßen Methylendithiepansilane der Formel (I) sind Verbindungen gemäß den folgenden Formeln II bis V.

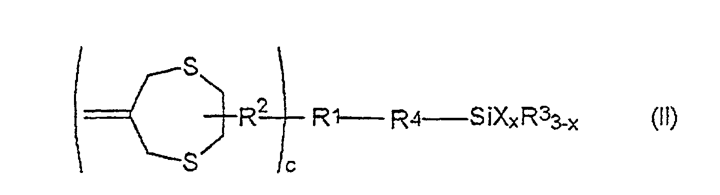

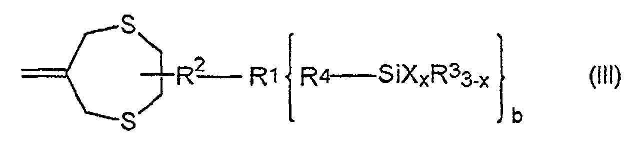

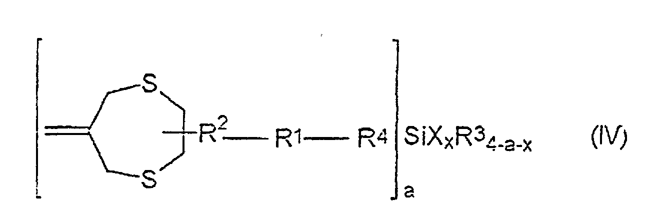

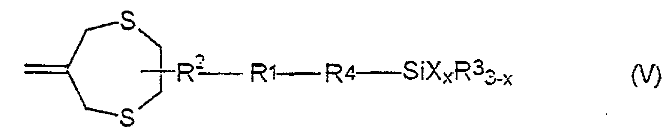

Konkrete Beispiele besonders bevorzugter Silane gemäß Formel (I) sind:

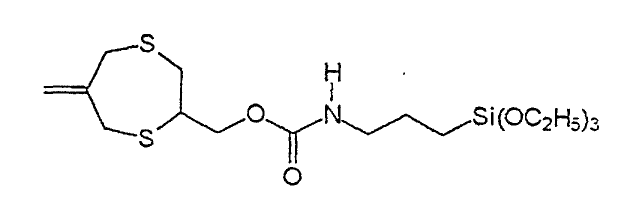

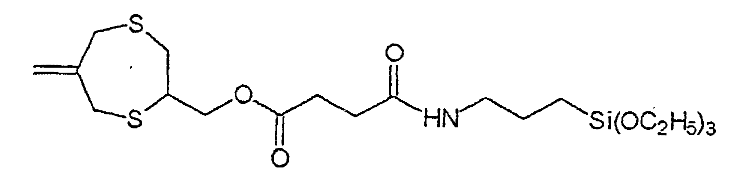

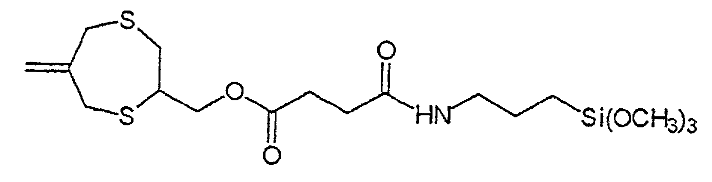

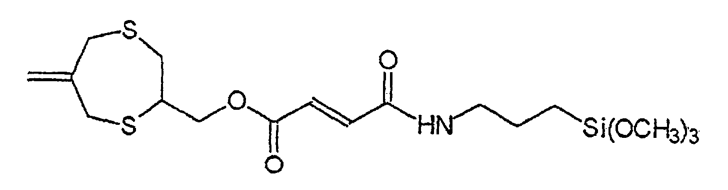

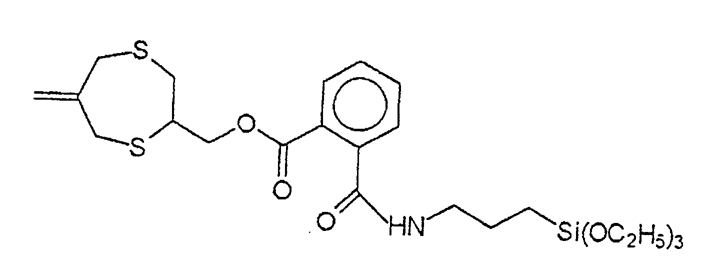

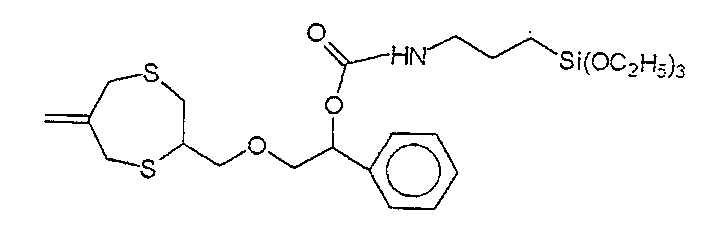

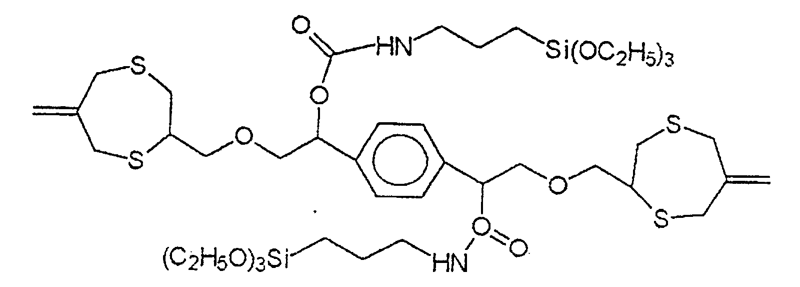

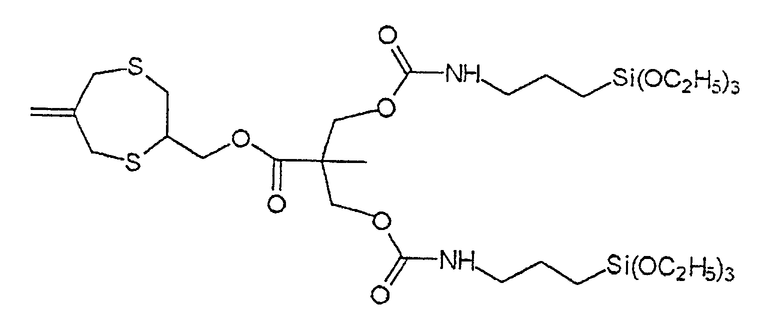

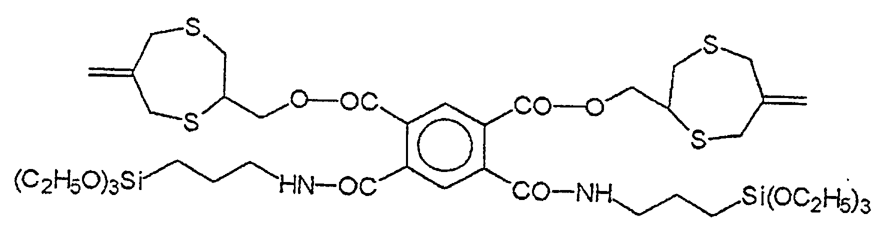

Die Silane der Formel (I) sind über an sich bekannte Additions- und Kondensationsreaktionen zugänglich, wobei durch die geeignete Auswahl der Edukte die Anzahl der hydrolysierbaren Gruppen, der polymerisationsfähigen Gruppen und weiterer funktioneller Gruppen variiert werden kann.

Für die Silansynthese geeignete funktionalisierte 2-Methylendithiepanvorläufer sind beispielsweise durch Umsetzung von Monooder Multicarbonsäureanhydriden (A) oder Mono- oder Multiepoxiden (B) mit Hydroxymethyl-6-methylen-1,4-dithiepan, dessen Synthese in der WO 96/19471 beschrieben ist, zugänglich. Anschließend werden die bei dieser Reaktion gebildeten Carboxylgruppen (A) bzw. Hydroxylgruppen (B) z.B. mit 3-Isocyanatopropyltriethoxysilan umgesetzt.

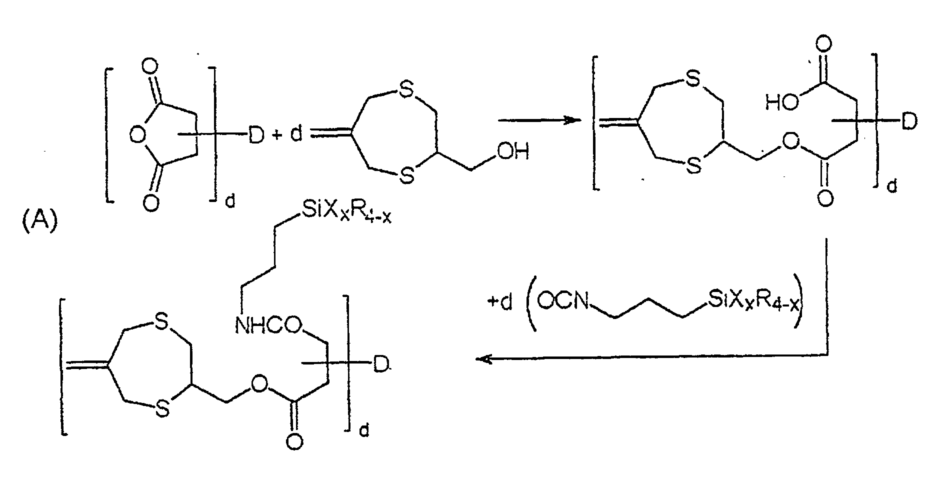

Die erfindungsgemäßen Methylendithepansilane sind über die Methylendithepangruppe radikalisch-ringöffnend poylmerisierbar und über die Reste X hydrolytisch kondensierbar. Dabei führt die Ringöffnungspolymerisation der Dithiepanringe zum Aufbau eines organischen Netzwerks, während die hydolysierbaren Gruppen durch Polykondensation ein anorganisches Polysiloxan-Netzwerk ergeben. Ein besonderer Vorteil der erfindungsgemäßen Silane ist darin zu sehen, daß sie sich mit hoher Geschwindigkeit bei Raumtemperatur radikalisch polymerisieren lassen, gleichzeitig jedoch sehr stabil sind. Die nach hydrolytischer Polykondensation und radikalischer Polymerisation erhaltenen Produkte sich zudem feuchtigkeitsunempfindlich.

Ein weiterer Vorteil der erfindungsgemäßen Silane ist ihr unerwartet hoher Brechungsindex. Dieser liegt im allgemeinen über 1,50 und vorzugsweise über 1,52 und ganz besonders bevorzugt im Bereich von 1,53 bis 1,55 (gemessen für die D-Linie des Natriumlichts bei 25 C), d.h. im Bereich des Brechungsindex von üblichen dentalen Füllstoffen. Somit erlauben die erfindungsgemäßen Silane eine genaue Abstimmung der Brechungsindices von Silan und Füllstoff und damit die Herstellung von Dentalmaterialien mit hoher Transparenz.

Die erfindungsgemäßen Silane können als solche, in hydrolytisch kondensierter Form oder in teilweise polymerisierter Form eingesetzt werden. Im allgemeinen werden die Silane zunächst hydrolytisch kondensiert und die hierbei erhaltenen Polysiloxane anschließend durch ringöffnende Polymerisation gehärtet.

Die Silane (I) können entweder allein oder zusammen mit anderen hydrolytisch kondensierbaren Verbindungen des Siliciums, Aluminiums, Zirkoniums, Titans, Bors, Zinns und/oder Vanadiums zu den Polysiloxanen verarbeitet werden. Diese zusätzlichen Verbindungen können entweder als solche oder bereits in vorkondensierter Form eingesetzt werden.

Bevorzugte weitere hydrolytisch kondensierbare Verbindungen des Siliciums sind Silane der allgemeinen Formel (VI)

R⁷ ₖ(Z'R⁸)ₘSiX'₄₋₍ₖ₊ₘ₎ Formel (VI)

in der
- R⁷: für eine C₁- bis C₈-Alkyl-, C₂- bis C₁₂-Alkenyl- oder C₆- bis C₁₄-Arylgruppe steht;
- R⁸: für eine C₁- bis C₈-Alkylen-, C₂- bis C₁₂-Alkenylen- oder C₆- bis C₁₄-Arylengruppe steht;
- X': für ein Wasserstoff- oder Halogenatom oder eine C₁- bis C₈--Alkoxygruppe steht;
- Z': für eine Glycidyl-, Acryl-, Methacryl-, Vinyl-, Allyl- oder Vinylethergruppe steht;
- k: gleich 0, 1, 2 oder 3 ist;
- m: gleich 0, 1, 2 oder 3 ist; und
- k+m: gleich 0, 1, 2 oder 3 ist.

Unabhängig voneinander wählbare bevorzugte Definitionen für die einzelnen Variablen sind:
- R⁷ =: eine C₁- bis C₃-Alkyl-, C₂- bis C₅-Alkenyl- oder eine Phenylgruppe;
- R⁸ =: eine C₁- bis C₅-Alkylen-, C₂- bis C₅-Alkenylen- oder eine Phenylengruppe;
- X' =: ein Halogenatom, eine Methoxy- oder Ethoxygruppe;
- Z' =: eine Acryl- oder Methacrylgruppe;
- k =: 0 und 1;
- m =: 0 und 1;
- k+m =: 0, 1 oder 2.

Derartige Silane sind beispielsweise in der DE 34 07 087 A1 beschrieben. Besonders bevorzugte Silane der Formel (VI) sind:
CH₃-SiCl₃, CH₃-Si(OC₂H₅)₃, C₂H₅-SiCl₃, C₂H₅-Si(OC₂H₅)₃, CH₂=CH-Si(OC₂H₅)₃, CH₂=CH-Si(OCH₃)₃, CH₂=CH-Si(OC₂H₄OCH₃)₃, (CH₃)₂SiCl₂, (CH₃)₂Si(OC₂H₅)₂, (C₂H₅)₃Si-Cl, (C₂H₅)₂Si(OC₂H₅)₂, (CH₃)₃Si-Cl, (CH₃O)₃Si-C₃H₆NH₂, (CH₃O)₃Si-C₃H₆SH, (CH₃O)₃Si-C₃H₆NH₂,

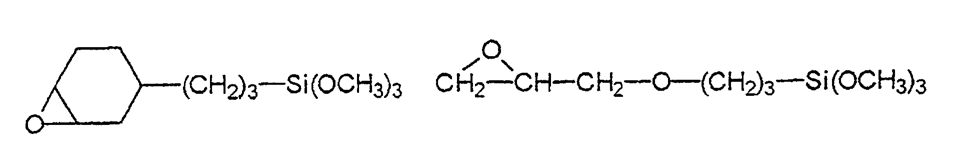

Silane der allgemeinen Formel (VI) bzw. davon abgeleitete vorkondensierte Produkte werden vorzugsweise in einer Menge von 0 bis 90 mol-%, besonders bevorzugt 1 bis 60 mol-% und ganz besonders bevorzugt 1 bis 40 mol-% bezogen auf die Gesamtmasse an Silanen der Formeln (I) und (VI) oder davon abgeleiteten vorkondensierten Produkten eingesetzt.

Bevorzugte Zirkonium- und Titanverbindungen sind solche gemäß Formel (VII)

MeX"_{y}R⁹ _{z} Formel (VII)

in der
- Me: für Zr oder Ti steht;
- R⁹: für ein Wasserstoffatom, eine substituierte oder unsubstituierte C₁- bis C₁₂-Alkyl-, C₁- bis C₁₅-Alkylaryl- oder C₆₋- bis C₁₄-Arylgruppe steht;
- X": für ein Halogenatom, eine Hydroxyl- oder C₁-bis C₈-Alkoxygruppe steht;
- Y: gleich 1 bis 4 ist;
- Z: gleich 0 bis 3 ist.

Unabhängig voneinander wählbare bevorzugte Definitionen für die einzelnen Variablen sind:
- R⁹ =: eine C₁- bis C₅-Alkyl- oder eine Phenylgruppe;
- X" =: ein Halogenatom, eine Methoxy-, Ethoxy- oder Propoxygruppe;
- Y =: 4;
- Z =: 0 oder 1, insbesondere 0.

Besonders bevorzugte Zirkonium- und Titanverbindungen sind ZrCl₄, Zr(OC₂H₅)₄, Zr(OC₃H₇)₄, Zr(OC₄H₉)₄, ZrOCl₂, TiCl₄, Ti(OC₂H₅)₄, Ti(OC₃H₇)₄ und Ti(OC₄H₉)₄.

Die Zirkonium- und Titanverbindungen der allgemeinen Formel (VII) bzw. davon abgeleitete vorkondensierte Produkte werden vorzugsweise in einer Menge von 0 bis 70 mol-%, besonders bevorzugt 0 bis 50 mol-% oder 0 bis 30 mol-% und ganz besonders bevorzugt 0 bis 20 mol-% bezogen auf die Gesamtmasse an Verbindungen der Formeln (I) und (VII) oder davon abgeleiteten vorkondensierten Produkten eingesetzt.

Bevorzugte Aluminiumverbindungen sind solche gemäß der Formel (VIII)

AlR¹⁰ ₃ Formel (VIII)

in der
- R¹⁰: für ein Halogenatom, eine Hydroxyl- oder C₁- bis C₈-Alkoxygruppe, vorzugsweise für ein Halogenatom oder eine C₁- bis C₅-Alkoxygruppe steht.

Besonders bevorzugte Aluminiumverbindungen sind Al(OCH₃)₃, Al(OC₂H₅)₃, Al(OC₃H₇)₃, Al(OC₄H₉)₃ und AlCl₃.

Die Aluminiumverbindungen der allgemeinen Formel (VIII) bzw. davon abgeleitete vorkondensierte Produkte werden vorzugsweise in einer Menge von 0 bis 70 mol-%, besonders bevorzugt 0 bis 30 mol-% und ganz besonders bevorzugt 0 bis 20 mol-% bezogen auf die Gesamtmasse an Verbindungen der Formeln (I) und (VIII) oder davon abgeleiteten vorkondensierten Produkten eingesetzt.

Außerdem können komplexierte Verbindungen des Zirkoniums, Titans und Aluminiums eingesetzt werden, wobei als Komplexbildner Säuren und β-Dicarbonylverbindungen bevorzugt sind. Bevorzugte Säuren sind Acryl- und Methacrylsäure oder andere Methacrylatcarbonsäuren, wie z.B. 2-Methacryloyloxyethylhydrogensuccinat oder die 1:1-Addukte aus Glycerindimethacrylat und Carbonsäureanhydriden, wie z.B. Bernsteinsäure- oder Phthalsäureanhydrid. Bevorzugte β-Carbonylverbindungen sind Acetylaceton, Acetessigsäureethylester und insbesondere 2-Acetoacetoxyethylmethacrylat. Diese Komplexbildner werden bevorzugt mit Alkoxyderivaten des Zirkoniums, Titans oder Aluminiums im Molverhältnis von 1:1 umgesetzt.

Darüber hinaus eignen sich Bortrihalogenide, Zinntetrahalogenide, Zinntetraalkoxide und/oder Vanadylverbindungen zur Cokondensation mit den Silanen gemäß Formel (I).

Bei der Verwendung zusätzlicher hydrolytisch kondensierbarer Verbindungen beträgt der Anteil von Silanen gemäß Formel (I) an den Polysiloxanen vorzugsweise 10 bis 100 mol-%, besonders bevorzugt 40 bis 100 mol-%, bezogen jeweils auf die monomeren Ausgangsverbindungen. Der Anteil an Silanen (I) und (VI) zusammen beträgt vorzugsweise mindestens 20 mol-%, besonders bevorzugt mindestens 80 mol-%, ebenfalls bezogen auf die monomeren Ausgangsverbindungen.

Die Herstellung der Polysiloxane erfolgt durch hydrolytische Kondensation der oben aufgeführten Verbindungen. Im Fall der Silane der allgemeinen Formeln (I) und (VI) werden hierbei zunächst die hydrolysierbaren Gruppen X abgespalten, wobei Silanole, Silandiole und Silantriole erhalten werden, die unter Wasserabspaltung zu Polysiloxanen mit einem anorganischen Netzwerk aus Si-O-Si-Einheiten kondensieren.

Die hydrolytische Kondensation der Silane erfolgt im allgemeinen indem die zu hydrolisierende Siliciumverbindung entweder direkt oder gelöst in einem geeigneten Lösungsmittel, bei einer Temperatur von 0 bis 100 °C, vorzugsweise 20 bis 80 °C und besonders bevorzugt zwischen 20 und 50 °C, mindestens mit der zur vollständigen Hydrolyse stöchiometrisch erforderlichen Wassermenge versetzt und die resultierende Mischung für eine oder mehrere Stunden gerührt wird. Als Lösungsmittel eignen sich insbesondere aliphatische Alkohole wie zum Beispiel Ethanol oder Isopropanol, Dialkylketone, wie Aceton oder Methylisobutylketon, Ether, wie zum Beispiel Diethylether oder Tetrahydrofuran (THF), Ester, wie zum Beispiel Ethyl- oder Butylacetat, und Gemische davon.

Die Hydrolyse und Kondensation der Ausgangsmischung erfolgt vorzugsweise in Gegenwart eines Kondensationskatalysators, wobei Protonen oder Hydroxylionen abspaltende Verbindungen, wie organische oder anorganische Säuren oder Basen, sowie Fluoridionen abgebende Verbindungen, wie Ammoniumfluorid oder Natriumfluorid, bevorzugt sind. Besonders bevorzugt sind flüchtige Säuren oder Basen, insbesondere Salzsäure oder Ammoniak. Es hat sich bewährt, bei der Hydrolyse und Kondensation Verfahrensweisen der Sol-Gel-Technologie zu übernehmen, wie sie zum Beispiel in C.J. Brinker et al., "Sol-Gel-Science", Academic Press, Boston, 1990, beschrieben sind.

Wird die hydrolytische Kondensation in Gegenwart von Zirkonium-, Titan- oder Aluminiumverbindungen durchgeführt, erfolgt die Wasserzugabe vorzugsweise stufenweise wobei die Temperatur vorzugsweise im Bereich von etwa 0 bis 30 °C gehalten wird. Es ist häufig vorteilhaft, daß Wasser in Form wasserhaltiger Lösungsmittel, wie zum Beispiel wäßrigem Ethanol, zuzugeben oder in situ zu erzeugen, beispielsweise durch chemische Reaktionen wie Veresterungen.

Die erhaltenen Polysiloxane können direkt oder nach teilweiser oder vollständiger Entfernung des Lösungsmittels eingesetzt werden. Häufig ist es vorteilhaft, das zur hydrolytischen Kondensation eingesetzte Lösungsmittel durch ein anderes Lösungsmittel zu ersetzen. Die Silane (I) und erst recht die Polysiloxane weisen aufgrund ihres hohen Molekulargewichts nur eine geringe Flüchtigkeit auf und lassen sich daher weitgehend unbedenklich verarbeiten. Im Hinblick auf die mechanischen Eigenschaften der Polysiloxane ist es vorteilhaft, die hydrolytische Kondensation bis zu einem Kondensationsgrad von 65 bis 95 % zu führen, wobei sich der Kondensationsgrad durch ²⁹Si-NMR bestimmen läßt.

Die vollständige Aushärtung der Polysiloxane erfolgt durch Zugabe geeigneter Initiatoren und ggf. weiterer polymerisationsfähiger Komponenten durch thermische, photochemische oder redoxinduzierte Polymerisation. Dabei können bei Vorhandensein unterschiedlicher polymerisationsfähiger Gruppen, z.B. von (Meth)acryl- und Epoxidgruppen, auch mehrere Härtungsmechanismen, z.B. rsdikalische und kationische Polymerisation, gleichzeitig oder in aufeinander folgenden Stufen zur Anwendung kommen.

Zur Initiierung der radikalischen Polymerisation werden vorzugsweise thermische und/oder Photoinitiatoren verwendet.

Bevorzugte Initiatoren für die thermische Härtung sind Peroxide, wie beispielsweise Dibenzoylperoxid, Dilaurylperoxid, tert.-Butylperoctoat und tert.-Butylperbenzoat sowie Azobisisobutyroethylester, Benzpinakol und 2,2-Dimethylbenzpinakol.

Bevorzugte Photoinitiatoren sind Benzophenon und Benzoin sowie deren Derivate, α-Diketone und deren Derivate, wie beispielsweise 9,10-Phenanthrenchinon, Diacetyl und 4,4-Dichlorbenzil. Besonders bevorzugte Photoinitiatoren sind Champherchinon und 2,2-Methoxy-2-phenyl-acetophenon und insbesondere Kombinationen von α-Diketonen mit Aminen als Reduktionsmittel, wie zum Beispiel N-Cyanoethyl-N-methylanilin, 4-(N,N-Dimethylamino)-benzoesäureester, N,N-Dimethylaminoethylmethacrylat, N,N-Dimethyl-sym.xylidin oder Triethanolamin. Darüber hinaus sind Acylphosphine, wie zum Beispiel 2,4,6-Trimethylbenzoyldiphenyl- oder Bis-(2,6-dichlorbenzoyl)-4-N-propylphenylphosphinoxid, als Photoinitiatoren geeignet.

Für die duale Aushärtung von radikalisch und kationisch polymerisierbaren Systemen eignen sich besonders Diaryliodonium- oder Triarylsulfoniumsalze, wie zum Beispiel Triphenylsulfoniumhexafluorophosphat und -hexafluoroantimonat.

Als Initiatoren für eine Polymerisation bei Raumtemperatur werden Redox-Initiatorkombinationen, wie zum Beispiel Kombinationen von Benzoyl- oder Laurylperoxid mit N,N-Dimethyl-sym.-xylidin oder N,N-Dimethyl-p-toluidin, verwendet.

Die Polymerisation von Polysiloxanen mit zwei oder mehr Methylendithiepanresten ergibt dreidimensionale, organische Netzwerke, wobei sich die mechanischen Eigenschaften, wie zum Beispiel Festigkeit und Flexibilität, sowie die physikalischchemischen Eigenschaften der gehärteten Materialien, wie zum Beispiel das Haftungsvermögen, Wasseraufnahme und Brechungszahl, über den Abstand zwischen den Si-Atomen und den polymerisationsfähigen Methylendithiepanresten, d.h. über die Länge der Spacer-Gruppe -R²-R¹-R⁴-, sowie über die Anwesenheit weiterer funktioneller Gruppen variieren und den Anforderungen des jeweiligen Anwendungsfalles optimal anpassen lassen. Dabei ergibt die Verwendung aliphatischer Gruppen als Spacer relativ flexible und die Verwendung aromatischer Gruppen relativ steife Produkte.

Durch die Anzahl der polymerisationsfähigen Methylendithiepangruppen läßt sich die Vernetzungsdichte der ausgehxärteten Materialien einstellen, was eine weitere Beeinflussung der Eigenschaften und Einsatzmöglichkeiten der Polysiloxane erlaubt.

Enthalten die monomeren Silane darüber hinaus ionisch vernetzbare Gruppen, wie zum Beispiel Epoxid- oder Oxethangruppen, kann durch deren gleichzeitige oder anschließende ionische Polymerisation eine weitere Erhöhung der Vernetzungsdichte erreicht werden.

Die Polysiloxane können in Mischung mit geeigneten ionisch und/oder radikalisch polymerisierbaren mono- oder multifunktionellen Monomeren eingesetzt werden. Bevorzugte Monomere sind Mono(meth)acrylate, wie Methyl-, Ethyl-, Butyl-, Benzyl-, Furfuryl- oder Phenyl(meth)acrylat, mehrfunktionelle Acrylate und Methacrylate wie zum Beispiel Bisphenol-(A)-di(meth)acrylat, Bis-GMA (ein Additionsprodukt aus Methacrylsäure und Bisphenol-Adiglycidylether), UDMA (ein Additionsprodukt aus 2-Hydroxyethylmethacrylat und 2,2,4-Hexamethylendiisocyanat), Di-, Tri- und Tetraethylenglykoldi(meth)acrylat, Decandioldi(meth)acrylat, Trimethylolpropantri(meth)acrylat, Pentaerythrittetra(meth)acrylat und Butandioldi(meth)acrylat, 1,10-Decandioldi(meth)acrylat oder 1,12-Dodecandioldi(meth)acrylat.

Die polymerisierbaren Monomere werden vorzugsweise in einer Menge von 1 bis 80 Gew.-%, besonders bevorzugt 5 bis 50 Gew.-% und ganz besonders bevorzugt 5 bis 30 Gew.% bezogen auf die Gesamtmasse an polymerisierbarem Monomer und Silan der Formeln (I) oder davon abgeleiteten vorkondensierten Produkten eingesetzt.

Die Mischungen können darüber hinaus weitere Additive wie Färbemittel (Pigmente und Farbstoffe), Stabilisatoren, Aromastoffe, mikrobiozide Wirkstoffe, Flammschutzmittel, Weichmacher und/oder UV-Absorber enthalten.

Weiterhin können die Zusammensetzungen zur Verbesserung der mechanischen Eigenschaften mit organischen oder anorganischen Partikeln oder Fasern gefüllt werden. Bevorzugte anorganische partikuläre Füllstoffe sind amorphe kugelförmige Materialien auf der Basis von Mischoxiden aus SiO₂, ZrO₂ und/oder TiO₂ (DE 40 29 230 A1), mikrofeine Füllstoffe, wie pyrogene Kieselsäure oder Fällungskieselsäure sowie Makro- (Partikelgröße von 5 µm bis 200 µm) oder Minifüllstoffe (Partikelgröße von 0,5 bis 5 µm), wie Quarz-, Glaskeramik- oder Glaspulver, insbesondere Barium- und Strontium-Silikatglaspulver, Lithium-Aluminium-Silikatglaspulver, Silicium-, Zirkonium- und Aluminiumoxid oder deren Mischoxide mit einer durchschnittlichen Teilchengröße von 0,5 µm bis 5 µm sowie röntgenopake Füllstoffe, wie Ytterbiumtrifluorid. Darüber hinaus können auch Glasfasern, Polyamid- oder Kohlenstoffasern als Füllstoffe eingesetzt werden.

Die erfindungsgemäßen Silane können als solche oder in hydrolytisch kondensierter oder teilweise polymerisierter Form als Lacke zur Beschichtung von Kunstoffen, Glas oder anderen Substraten eingesetzt werden. Darüber hinaus eignen sie sich als Klebstoff, Haftvermittler und zur Herstellung von Kontaklinsen, Füllstoffen und Bulkmaterialien für Komposite und insbesondere von medizinische Materialen, wie Dentalmaterialien.

Die erfindungsgemäßen Methylendithiepansilane, davon abgeleitete Polysiloxane sowie Zusammensetzungen, die neben dem oder den Mehylendithiepansilanen und/oder Polypiloxanen Initiator, Monomer, Additiv und/oder Füllstoff enthalten, eignen sich besonders als Dentalmaterialien, wie Adhäsive, Beschichtungsmaterialien, dentale Zemente und Füllungsmaterialien.

Eine bevorzugte Zusammensetzung enthält:
(a) 5 bis 99,9 Gew.-%, vorzugsweise 5 bis 90 Gew.-%, besonders bevorzugt 10 bis 70 Gew.-% Polysiloxan; und
(b) 0,1 bis 5,0 Gew.-%, vorzugsweise 0,2 bis 2,0 Gew.-% Polymerisationsinitiator; und vorzugsweise
(c) 1,0 bis 80 Gew.-%, vorzugsweise 5,0 bis 50 Gew.-% ionisch und/oder radikalisch polymerisierbares Monomer; und vorzugsweise
(d) 1,0 bis 90 Gew.-%, vorzugsweise 2,0 bis 80 Gew.-% Füllstoffe.

Die Angaben beziehen sich jeweils auf die Gesamtmasse des Dentalmaterials.

Die Erfindung wird im folgenden anhand von Ausführungsbeispielen näher erläutert.

### Beispiel 1

### Synthese von N-[3-(Triethoxysilyl)propyl]-[2-(6-methylen-1,4-dithiepan)methyl]carbamat

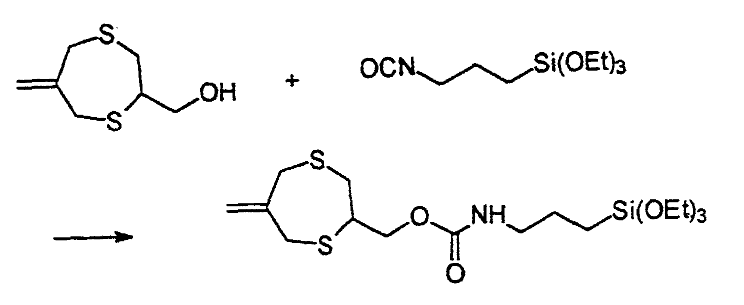

11 g (45 mmol) 3-Isocyanatopropyltriethoxysilan werden zu einer eisgekühlten Lösung von 8 g (45 mmol) 2-Hydroxymethyl-6-methylen-1,4-dithiepan, das nach der WO 96/19471 hergestellt wurde, und einem Tropfen Metatin 812 (Dibutylzinndilaurat) in 15 ml getrocknetem Methylenchlorid getropft. Nach 14 h Rühren bei Raumtemperatur ist die NCO-Bande bei 2280 cm⁻¹ im IR-Spektrum nicht mehr detektierbar, so daß dann das Lösungsmittel bei vermindertem Druck unter Einleiten von trockener Luft abdestilliert wird. Es verbleiben 17,6 g (92 %) einer schwach gefärbten Flüssigkeit mit einem Brechungsindex von n_{D}²⁵ = 1,5039

IR (Film): 3342 (s), 2973 (s), 2976 (s), 1723 (s), 1634 (w), 1530 (m), 1443 (m), 1393 (m), 1241 (m) und 1078 (s) cm⁻¹.

¹H-NMR (CDCl₃): δ = 0,63 (t, 2H, CH₂Si), 1,24 (t, 9H, CH₃), 1,62 (m, 2H, CH₂), 2,91-3,18 (m, 5H, CH₂N+CH₂S+CHS), 3,59 (m, 4H, =CCH₂S), 3,83 (q, 6H, SiOCH₂), 4,26 (m, 2H, CHCH₂O), 5,04 (d, 2H, =CH₂) und 5,52 (br., 1H, NH) ppm.

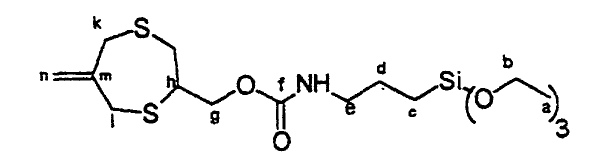

¹³C-NMR (CDCl₃): δ = 8,0 (c), 18,6 (a), 23,5 (d), 35,5 (i), 39,2 (h), 40,5 (e), 43,8 (l), 49,4 (k), 58,7 (b), 65,7 (g), 111,7 (n), 148,0 (m) und 156,3 (f) ppm.

### Beispiel 2

### Hydrolytische Kondensation von N-[3-Triethoxysilyl)propyl][2-(6-methylen-1,4-diethiepan)methyl]carbamat

100 mmol des Silans werden in 192 ml wasserfreiem THF gelöst. Die Hydrolyse erfolgt durch Zugabe von 3,0 mol Wasser in Form von 0,1 wässriger HCl. Nach 72 h Rühren bei Raumtemperatur (RT) werden die flüchtigen Komponenten im Vakuum entfernt und es entsteht ein viskoses Harz, das mittels ²⁹Si-NMR-Spektroskopie einen Kondensationsgrad von 72% zeigt. Das gebildete Harz kann als Monomerkomponente für die radikalische Polymerisation eingesetzt werden.

### Beispiel 3

### Herstellung eines Dentalzementes auf der Basis der Sol-Gel-Kompontente aus Beispiel 2

Entsprechend der nachfolgend aufgeführten Tabelle 1 wurde ein Kompositbefestigungszement auf der Basis von A) einer Methacrylatmischung und B) unter Einbeziehung des hydrolytischen Kondensates aus Beispiel 2 auf Basis von N-[3-(Triethoxysilyl)propyl]-[2-(6-methylen-1,4-diethiepan)methyl]carbamat mittels eines Walzenstuhles des Typs Exakt (Exakt Apparatebau, Norderstedt) hergestellt. Von den Materialien wurden entsprechende Prüfkörper präpartiert, die 2 mal 3 Minuten mit einer dentalen Lichtquelle (Spectramat, Fa. Vivadent) im Wellenlängenbereich von 370 bis 520 nm bestrahlt wurden.

Aus Tabelle 2 ist ersichtlich, daß das Material A mit der konventionellen Methacrylatmischung den größten Polymerisationschrumpf aufweist.

**Tabelle 1 :**

| Zementzusammensetzung | | |
|---|---|---|
| Stoffe | Material A Anteile (Gew.-%) | Material B Anteile (Gew.-%) |
| Urethandimethacrylat¹⁾ | 31,6 | 31,6 |
| Dodecandioldimethacrylat | 7,8 | - |
| Hydrolytisches Kondensat aus Beispiel 2 | - | 7,8 |
| Aerosil OX-50 (Degussa) | 41,2 | 41,2 |
| Ytterbiumtrifluorid (Rhone-Poulenc) | 18,7 | 18,7 |
| Photoinitiator² | 0,7 | 0,7 |

| | | |
|---|---|---|
| ¹⁾ Urethandimethacrylat aus 2 mol 2-Hydroxyethylmethacrylat und 1 mol 2,2,4-Trimethylhexamethylendiisocyanat-1,6 | | |
| ²⁾ 1:1 Mischung aus Campferchinon und N,N-Diethyl-3,5-di-tert.butylanilin | | |

**Tabelle 2 :**

| Zementeigenschaften | | |
|---|---|---|
| Materialeigenschaften | Material A | Material B |
| Polymerisationsschrumpf (Vol.-%) | 4,9 | 2,6 |
| Biegefestigkeit nach ISO 4049 (MPa) | 86 | 54 |
| Biege-E-Modul nach ISO 4049 (GPa) | 3,19 | 2,86 |

### Beipiel 4

### 2-[(3-Triethoxysilylpropyl)aminocarbonyl]-benzoesäure-(6-methylen-1,4-dithiepan-2-yl)methylester

### 1. Stufe: 6-Methylen-1,4-dithiepanyl-2-ylmethylhydrogenphthalat

5,7 g (56,7 mmol) Triethylamin in 20 ml Methylenchlorid werden bei Raumtemperatur zu einer Lösung aus 10 g (56,7 mmol) 2-Hydroxymethyl-6-methylen-1,4-dithiepan, 8,4 g (56,7 mmol) Phthalsäureanhydrid, 100 mg MeHQ und 50 mg DMAP (4-(N,N'-Dimethylaminopyridin) in 40 ml Methylenchlorid getropft. Nach 20 h Rühren bei 35 bis 40 °C unter Einleiten von trockener Luft wird das Reaktionsgemisch 4 mal mit je 40 ml 2 N HCl und 4 mal mit je 40 ml Wasser gewaschen. Es wird über Natriumsulfat getocknet, und das Lösungsmittel am Rotationsverdamfer erst bei 100 mbar, später im Feinvakuum abdestilliert. Es verbleiben 14,3 g (77,7 % Ausbeute) einer orangen Flüssigkeit, die allmählich zu einem beigen Feststoff auskristallisiert. Schmelzpunkt: 78,5-79 °C.

IR (KBr-Preßling): 3445 (w), 3076 (m), 2955 (m), 2899 (m), 1736 (s), 1686 (s), 1424 (m), 1286 (s) und 1121 (m) cm⁻¹.

¹N-NMR (CDCl₃): δ = 2,93-3,21 (m, 3H, SCH₂/SCH), 3,50-3,69 (m, 4H, SCH₂), 4,45-4,83 (m, 2H, OCH₂), 4,85 (d, 2H, =CH₂), 7,58-7,94 (m, 4H, aromatische H) und 11,0 (br, 1H, COOH) ppm.

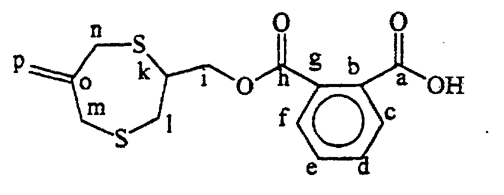

¹³C-NMR (CDCl₃); δ = 34,6 (l), 37,6 (n), 39,9 (m), 47,5 (k), 66,4 (i), 111,6 (p), 128,7-133,0 (b, c, d, e, f, g), 147,4 (o), 167,6 (h) und 172,2 (a) ppm.

### 2. Stufe: 2-[(3-Triethoxysilylpropyl)aminocarbonyl]-benzoesäure-(6-methylen-1,4-dithiepan-2-yl)methylester

Zu einer Lösung von 13 g (40 mmol) 6-Methylen-1,4-dithiepanyl-2-methylhydrogenphthalat, 9 g (40 mmol) 3-Aminopropyltriethoxysilan und 94 mg DMAP werden bei 0 °C 8,5 g (44 mmol) EDC (N-(3-Dimethylaminopropyl)-N'-ethylcarbodiimidhydrochlorid) portionsweise zugegeben. Das Reaktionsgemisch wird 2 h bei 0 °C und weitere 36 h bei Raumtemperatur gerührt. Der Reaktionsverlauf wird mit IR-Spektroskopie verfolgt. Nachdem das Methylenchlorid am Rotationsverdampfer weitestgehend abdestilliert worden ist, wird der Rückstand mit 150 ml Ethylacetat aufgenommen und nacheinander mit je 150 ml eiskalter 0,3 N HCl, mit eiskalter 0,3 M Natriumcarbonatlösung und mit eiskalter gesättigter Natriumchloridlösung gewaschen. Nach dem Trocknen über Natriumsulfat wird das Lösungmittel erst bei ca. 100 mbar danach im Feinvakuum am Rotationsverdampfer entfernt. Es verbleiben 9,5 g (45 % Ausbeute) einer gelben Flüssigkeit mit einem Brechungsindex n_{D}²⁵ = 1,5373.

IR (Film): 3464 (w), 2973 (m), 2926 (m), 1773 (s), 1715 (s), 1396 (s) und 1078 (s) cm⁻¹.

¹H-NMR (CDCl₃): δ = 0,68 (t, 2H, CH₂Si), 1,24 (t, 9H, CH₃), 1,78-1,82 (m, 2H, CH₂), 2,95-3,20 (m, 3H, CH₂S/CHS), 3,28-3,40 (br, 1H, NH), 3,50-3,69 (m, 6H, =C-CH₂S)/NHCH₂), 3,72-3,85 (m, 8H, CH₂O), 4,84 (d, 2H, =CH₂) und 7,50-7,85 (m, 4H, aromatische H) ppm.

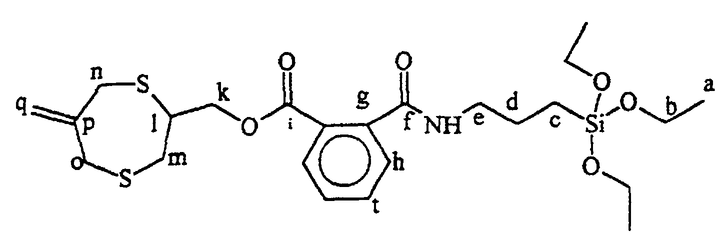

¹³C-NMR (CDCl₃): δ = 6,6 (c), 17,2 (a), 21,2 (d), 34,0 (m), 37,8 (n), 38,9 (o), 39,3 (e), 51,5 (l), 57,3 (b), 65,4 (k), 110,1 (q), 122,0 (h), 131,0 (g), 133,8 (t), 146,6 (p) und 167,2-167,5 (f, i) ppm.

## Patentansprüche

1. Methylendithiepan-Silan gemäß der Formel I 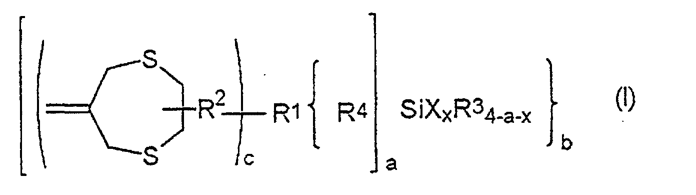 in der
R¹ = ein gesättigter oder ungesättigter aliphatischer oder alicyclischer Kohlenwasserstoffrest mit 1 bis 10 Kohlenstoffatomen ist, der durch ein oder mehrere Sauerstoff- und/oder Schwefelatome unterbrochen sein und eine oder mehrere Ester-, Carbonyl-, Amid- und/oder Urethangruppen enthalten kann, oder ein aromatischer oder heteroaromatischer Kohlenwasserstoffrest mit 6 bis 18 Kohlenstoffatomen ist, wobei die Kohlenwasserstoffreste substituiert oder unsubstituiert sein können;
R² = eine der für R¹ angegebenen Bedeutungen hat oder entfällt;
R³ = eine der für R¹ angegebenen Bedeutungen hat oder entfällt;
R⁴ = -(CHR⁶)ₙ-, -Y-CO-NH-(CHR⁶)ₙ-, -Y-CO-NH-R⁵-, -(CHR⁶)ₙ-S-R⁵-, -S-R⁵-, -CO-O-R⁵- ist oder entfällt, wobei n = 1 bis 4 ist, R⁶ = Wasserstoff, C₁- bis C₁₀-Alkyl- oder C₆- bis C₁₀-Aryl ist, R⁵ eine der für R¹ angegebenen Bedeutungen hat und Y ein O- oder S-Atom bedeutet oder entfällt; wobei R⁵ und R⁶ substituiert oder unsubstituiert sein können;
X = eine hydrolysierbare Gruppe ist;
a, b, c und x jeweils unabhängig voneinander 1, 2 oder 3 sind; wobei die Summe von a + x = 2 bis 4 ist.

2. Methylendithiepan-Silan nach Anspruch 1, bei dem
R¹, R², R³ und/oder R⁶ ein gesättigter oder ungesättigter aliphatischer oder alicyclischer Kohlenwasserstoffrest mit 1 bis 8 Kohlenstoffatomen ist, der durch Sauerstoff- oder Schwefelatome, Ester-, Carbonyl-, Amid- und/oder Urethangruppen unterbrochen sein kann, oder ein aromatischer Kohlenwasserstoffrest mit 6 bis 10 Kohlenstoffatomen ist;
R⁴ = -(CHR⁶)ₙ-, -Y-CO-NH-(CHR⁶)ₙ-, -Y-CO-NH-R⁵-, -S-R⁵-, -CO- O-R⁵- ist oder entfällt, wobei n = 1 bis 3 ist, R⁶ = Wasserstoff oder C₁- bis C₄-Alkyl- ist, R⁵ eine der für R¹ angegebenen Bedeutungen hat und Y ein O- oder S-Atom bedeutet oder entfällt;
X = Halogen, Hydroxy, C₁- bis C₃-Alkoxy oder C₁- bis C₃-Acyloxy ist;
a = 1;
b = 1 oder 2;
c = 1 oder 2; und/oder
x = 2 oder 3 ist.

3. Methylendithiepan-Silan nach Anspruch 2, bei dem
R¹ = ein gesättigter oder ungesättigter aliphatischer oder alicyclischer Kohlenwasserstoffrest mit 1 bis 6 Kohlenstoffatomen oder ein aromatischer Kohlenwasserstoffrest mit 6 bis 10 Kohlenstoffatomen ist;
R² = ein gesättigter oder ungesättigter aliphatischer Kohlenwasserstoffrest mit 1 bis 4 Kohlenstoffatomen ist, der ein Sauerstoffatom oder eine Estergruppe enthalten kann, oder entfällt;
R³ = eine Methy-, Ethyl- und/oder Phenylgruppe ist oder entfällt;
R⁴ = -(CH₂)ₙ- oder -Y-CO-NH-(CH₂)ₙ- ist, wobei n = 1 bis 3 ist, und Y ein O-Atom bedeutet oder entfällt; und/oder
X = Methoxy, Ethoxy oder Chlor ist.

4. Methylendithiepan-Silan nach einem der Ansprüche 1 bis 3 bei dem einer oder mehrere Reste R¹ bis R⁶ ggf. durch C₁- bis C₁₀-Alkyl-gruppen, C₆- bis C₁₀-Arylgruppen, Halogen, Hydroxy, Alkoxy, Hydroxylalkyl, Carboxy, -SO₃H, -PO₃H₂ und/oder -PO₄H₂ substituiert sind.

5. Methylendithiepan-Silan nach einem der Ansprüche 1 bis 4, bei dem der 1,4-Dithiepanring in Position 2 oder 3 substituiert ist.

6. Zusammensetzung enthaltend ein Polysiloxan auf der Basis von einem oder mehreren Methylendithiepan-Silanen gemäß einem der Ansprüche 1 bis 5 und ggf. einer oder mehreren weiteren hydrolytisch kondensierbaren Verbindungen.

7. Zusammensetzung nach Anspruch 6, **dadurch gekennzeichnet, daß** die weitere hydrolytisch kondensierbare Verbindung eine Verbindung des Siliciums, Aluminiums, Zirkoniums, Titans, Bors, Zinns, Vanadiums oder Phosphors ist.

8. Zusammensetzung nach Anspruch 7, **dadurch gekennzeichnet, daß** die weitere hydrolytisch kondensierbare Verbindung ein Silan gemäß der Formel (VI)
R⁷ ₖ(Z'R⁸)ₘSiX'₄₋₍ₖ₊ₘ₎ Formel (VI)
in der
R⁷ für eine C₁- bis C₈-Alkyl-, C₂- bis C₁₂-Alkenyl- oder C₆- bis C₁₄-Arylgruppe steht;
R⁸ für eine C₁- bis C₈-Alkylen-, C₂- bis C₁₂-Alkenylen- oder C₆- bis C₁₄-Arylengruppe steht;
X' für ein Wasserstoff- oder Halogenatom oder eine C₁- bis C₈-Alkoxygruppe steht;
Z' für eine Glycidyl-, Acryl-, Methacryl-, Vinyl-, allyl- oder Vinylethergruppe steht;
k gleich 0, 1, 2 oder 3 ist;
m gleich 0, 1, 2 oder 3 ist; und
k+m gleich 0, 1, 2 oder 3 ist;
eine Zirkonium-, Titanverbindung der Formel (VII)
MeX''_{y}R⁹ _{z} Formel (VII)
in der
Me für Zr oder Ti steht;
R⁹ für ein Wasserstoffatom, eine substituierte oder unsubstituierte C₁- bis C₁₂-Alkyl-, C₁- bis C₁₅-Alkylaryl- oder C₆₋- bis C₁₄-Arylgruppe steht;
X" für ein Halogenatom, eine Hydroxyl- oder C₁-bis C₈-Alkoxygruppe steht;
Y gleich 1 bis 4 ist; und
Z gleich 1 bis 3 ist;
eine Aluminiumverbindung gemäß der Formel VIII
Al R¹⁰ ₃ Formel (VIII)
in der
R¹⁰ für ein Halogenatom, eine Hydroxyl- oder C₁- bis C₈- Alkoxygruppe steht;
und/oder ein Bortrihalogenid, Zinntetrahalogenid, Zinntetraalkoxid und/oder eine Vanadylverbindung ist.

9. Zusammensetzung nach Anspruch 8, **dadurch gekennzeichnet, daß**
R⁷ = eine C₁- bis C₃-Alkyl-, C₂- bis C₅-Alkenyl- oder eine Phenylgruppe ist;
R⁸ = eine C₁- bis C₅-Alkylen-, C₂- bis C₅-Alkenylen- oder eine Phenylengruppe ist;
X' = ein Halogenatom, eine Methoxy- oder Ethoxygruppe ist;
Z' = eine Acryl- oder Methacrylgruppe ist;
k = 0 und 1 ist;
m = 0 und 1 ist;
k+m= 0, 1 oder 2 ist;
und/oder
R⁹ = eine C₁- bis C₅-Alkyl- oder eine Phenylgruppe ist;
X" = ein Halogenatom, eine Methoxy-, Ethoxy- oder Propoxygruppe ist;
Y = 4 ist;
Z = 0 oder 1, insbesondere 0 ist;
und/oder
R¹⁰ = ein Halogenatom oder eine C₁- bis C₅-Alkoxygruppe ist.

10. Zusammensetzung nach Anspruch 8 oder 9, **dadurch gekennzeichnet, daß** das Polysiloxan
1 bis 90 mol-%, vorzugsweise 1 bis 60 mol-% und insbesondere 1 bis 40 mol-% eines oder mehrerer Silane gemäß der allgemeinen Formel (VI) oder davon abgeleiteter vorkondensierter Produkte; und/oder
0 bis 70 mol-%, vorzugsweise 0 bis 50 mol-% und insbesondere 0 bis 30 mol-% einer oder mehrerer Zirkonium- und/oder Titanverbindungen der allgemeinen Formel (VII) oder davon abgeleiteter vorkondensierter Produkte; und/oder
0 bis 70 mol-%, vorzugsweise 0 bis 30 mol-% und insbesondere 0 bis 20 mol-% einer oder mehrerer Aluminiumverbindungen der allgemeinen Formel (VIII) oder davon abgeleiteter vorkondensierter Produkte enthält,
bezogen auf die Gesamtmasse an Verbindungen der Formel (I) und/oder davon abgeleiteten vorkondensiertern Produkten und Verbindungen der Formel (VI), Formel (VII) bzw. (VIII).

11. Zusammensetzung nach einem der Ansprüche 6 bis 10, **dadurch gekennzeichnet, daß** das Polysiloxan, bezogen auf die monomeren Ausgangsverbindungen, 10 bis 99 mol-% eines Silans gemäß der Formel (I) enthält.

12. Zusammensetzung nach einem der Ansprüche 6 bis 11, **dadurch gekennzeichnet, daß** sie zusätzlich ein ionisch und/oder radikalisch polymerisierbares Monomer enthält.

13. Zusammensetzung nach Anspruch 12, **dadurch gekennzeichnet, daß** sie ein Methyl-, Ethyl-, Butyl-, Benzyl-, Furfurylund/oder Phenyl(meth)acrylat, Bisphenol-A-di(meth)acrylat, Bis-GMA, UDMA, Di-, Tri- oder Tetraethylenglykoldi(meth)acrylat, Decandiol(meth)acrylat, Trimethylolpropantri(meth)acrylat, Pentaerythrittetra(meth)acrylat, Butandioldi(meth)acrylat, 1,10-Decandioldi(meth)acrylat oder 1,12-Dodecandioldi(meth)acrylat oder eine Mischung dieser Monomere enthält.

14. Zusammensetzung nach einem der Ansprüche 6 bis 13, **dadurch gekennzeichnet, daß** sie zusätzlich einen Füllstoff enthält.

15. Zusammensetzung nach einem der Ansprüche 6 bis 14, **dadurch gekennzeichnet, daß** sie einen Initiator für die radikalische Polymerisation enthält.

16. Zusammensetzung nach einem der Ansprüche 6 bis 15, **dadurch gekennzeichnet, daß** sie
(a) 5 bis 99,9 Gew.-% Polysiloxan; und
(b) 0,1 bis 5,0 Gew.-% Polymerisationsinitiator; und ggf.
(c) 1,0 bis 80 Gew.-% ionisch und/oder radikalisch polymerisierbares Monomer;
(d) 1,0 bis 90 Gew.-% Füllstoff enthält.

17. Verwendung einer Zusammensetzung gemäß einem der Ansprüche 6 bis 16 als Dentalmaterial.

18. Verwendung nach Anspruch 17 als Verbundmaterial, Zement, Füllungsmaterial oder Bonding.

## Claims

1. (Methylenedithiepane)silane according to formula I 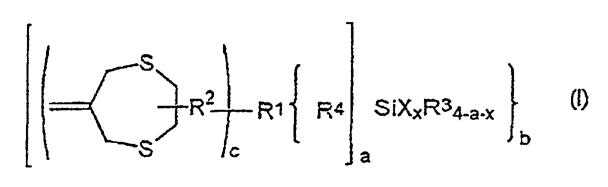 in which
R¹ is a saturated or unsaturated, aliphatic or alicyclic hydrocarbon residue having 1 to 10 carbon atoms which is interrupted by one or more oxygen and/or sulphur atoms and can comprise one or more ester, carbonyl, amide and/or urethane groups, or is an aromatic or heteroaromatic hydrocarbon residue having 6 to 18 carbon atoms, it being possible for the hydrocarbon residues to be substituted or unsubstituted;
R² is as defined for R¹ or is not present;
R³ is as defined for R¹ or is not present;
R⁴ is -(CHR⁶)ₙ-, -Y-CO-NH-(CHR⁶)ₙ-, -Y-CO-NH-R⁵-, -(CHR⁶)ₙ-S-R⁵-, -S-R⁵- or -CO-O-R⁵- or is not present, in which n is 1 to 4, R⁶ is hydrogen, C₁-C₁₀-alkyl or C₆-C₁₀- aryl, R⁵ is as defined for R¹ and Y is an O- or S-atom or is not present; in which R⁵ and R⁶ can be substituted or unsubstituted;
X is a hydrolysable group;
a, b, c and x are in each case, independently of one another, 1, 2 or 3; the sum of a + x being 2 to 4.

2. (Methylenedithiepane)silane according to Claim 1, in which
R¹, R², R³ and/or R⁶ is a saturated or unsaturated, aliphatic or alicyclic hydrocarbon residue having 1 to 8 carbon atoms which can be interrupted by oxygen atoms, sulphur atoms, ester groups, carbonyl groups, amide groups and/or urethane groups, or is an aromatic hydrocarbon residue having 6 to 10 carbon atoms;
R⁴ is -(CHR⁶)ₙ-, -Y-CO-NH-(CHR⁶)ₙ-, -Y-CO-NH-R⁵-, -S-R⁵- or -CO-O-R⁵- or is not present, in which n is 1 to 3, R⁶ is hydrogen or C₁-C₄-alkyl, R⁵ is as defined for R¹ and Y is an O- or S-atom or is not present;
X is halogen, hydroxyl, C₁-C₃-alkoxy or C₁-C₃-acyloxy;
a is 1;
b is 1 or 2;
c is 1 or 2; and/or
x is 2 or 3.

3. (Methylenedithiepane)silane according to Claim 2, in which
R¹ is a saturated or unsaturated, aliphatic or alicyclic hydrocarbon residue having 1 to 6 carbon atoms or is an aromatic hydrocarbon residue having 6 to 10 carbon atoms;
R² is a saturated or unsaturated, aliphatic hydrocarbon residue having 1 to 4 carbon atoms which can comprise an oxygen atom or an ester group, or is not present;
R³ is a methyl, ethyl and/or phenyl group or is not present;
R⁴ is -(CH₂)ₙ- or -Y-CO-NH-(CH₂)ₙ-, in which n is 1 to 3, Y is an O-atom or is not present; and/or
X is methoxy, ethoxy or chlorine.

4. (Methylenedithiepane)silane according to one of Claims 1 to 3, in which one or more residues R¹ to R⁶ are optionally substituted by C₁-C₁₀-alkyl groups, C₆-C₁₀-aryl groups, halogen, hydroxyl, alkoxy, hydroxyalkyl, carboxyl, -SO₃H, -PO₃H₂ and/or -PO₄H₂.

5. (Methylenedithiepane)silane according to one of Claims 1 to 4, in which the 1,4-dithiepane ring is substituted in the 2- or 3-position.

6. Composition comprising a polysiloxane based on one or more (methylenedithiepane)silanes according to one of Claims 1 to 5 and optionally one or more additional hydrolytically condensable compounds.

7. Composition according to Claim 1, **characterized in that** the additional hydrolytically condensable compound is a silicon, aluminium, zirconium, titanium, boron, tin, vanadium or phosphorus compound.

8. Composition according to Claim 7, **characterized in that** the additional hydrolytically condensable compound is a silane according to the formula (VI)
R⁷ ₖ(Z'R⁸)ₘSiX'₄₋₍ₖ₊ₘ₎ formula (VI)
in which
R⁷ is a C₁-C₈-alkyl, C₂-C₁₂-alkenyl or C₆-C₁₄-aryl group;
R⁸ is a C₁-C₈-alkylene, C₂-C₁₂-alkenylene or C₆-C₁₄-arylene group;
X' is a hydrogen or halogen atom or a C₁-C₈-alkoxy group;
Z' is a glycidyl, acryl, methacryl, vinyl, allyl or vinyl ether group;
k is 0, 1, 2 or 3;
m is 0, 1, 2 or 3; and
k+m is 0, 1, 2 or 3;
a zirconium or titanium compound of the formula (VII)
MeX"_{y}R⁹ _{z} formula (VII)
in which
Me is Zr or Ti;
R⁹ is a hydrogen atom or a substituted or unsubstituted C₁-C₁₂-alkyl, C₁-C₁₅-alkylaryl or C₆-C₁₄-aryl group;
X" is a halogen atom, a hydroxyl group or a C₁-C₈-alkoxy group;
Y is 1 to 4; and
Z is 1 to 3;
an aluminium compound according to the formula (VIII)
AlR¹⁰ ₃ formula (VIII)
in which
R¹⁰ is a halogen atom, a hydroxyl group or a C₁-C₈-alkoxy group;
and/or is a boron trihalide, a tin tetrahalide, a tin tetraalkoxide and/or a vanadyl compound.

9. Composition according to Claim 8, **characterized in that**
R⁷ is a C₁-C₃-alkyl, a C₂-C₅-alkenyl or a phenyl group;
R⁸ is a C1-C5-alkylene, a C2-C5-alkenylene or a phenylene group;
X' is a halogen atom or a methoxy or ethoxy group;
Z' is an acryl or methacryl group;
k is 0 or 1;
m is 0 or 1;
k + m is 0, 1 or 2;
and/or
R⁹ is a C1-C5-alkyl or a phenyl group;
X" is a halogen atom or a methoxy, ethoxy or propoxy group;
y is 4;
z is 0 or 1, in particular 0;
and/or
R¹⁰ is a halogen atom or a C₁-C₅-alkoxy group.

10. Composition according to Claim 8 or 9,
**characterized in that** the polysiloxane comprises
1 to 90 mol%, preferably 1 to 60 mol% and in particular 1 to 40 mol% of one or more silanes according to the general formula (VI) or precondensed products derived therefrom; and/or
0 to 70 mol%, preferably 0 to 50 mol% and in particular 0 to 30 mol% of one or more zirconium and/or titanium compounds of the general formula (VII) or precondensed products derived therefrom; and/or
0 to 70 mol%, preferably 0 to 30 mol% and in particular 0 to 20 mol% of one or more aluminium compounds of the general formula (VIII) or precondensed products derived therefrom,
with reference to the total mass of compounds of the formula (I) and/or precondensed products derived therefrom and compounds of the formula (VI), formula (VII) or formula (VIII).

11. Composition according to one of Claims 6 to 10,
**characterized in that** the polysiloxane comprises, with reference to the monomeric starting compounds, 10 to 99 mol% of a silane according to the formula (I).

12. Composition according to one of Claims 6 to 11,
**characterized in that** it additionally comprises an ionically and/or radically polymerizable monomer.

13. Composition according to Claim 12, **characterized in that** it comprises a methyl, ethyl, butyl, benzyl, furfuryl and/or phenyl (meth)acrylate, bisphenol A di(meth)acrylate, bis-GMA, UDMA, di-, tri- or tetraethyleneglycoldi(meth)acrylate, decanediol (meth)acrylate, trimethylolpropane tri(meth)acrylate, pentaerythritol tetra(meth)acrylate, butanediol di(meth)acrylate, 1,10-decanediol di(meth)acrylate or 1,12-dodecanediol di(meth)acrylate or a mixture of these monomers.

14. Composition according to one of Claims 6 to 13,
**characterized in that** it additionally comprises a filler.

15. Composition according to one of Claims 6 to 14,
**characterized in that** it comprises an initiator for the radical polymerization.

16. Composition according to one of Claims 6 to 15,
**characterized in that** it comprises
(a) 5 to 99.9 weight% of polysiloxane; and
(b) 0.1 to 5.0 weight% of polymerization initiator; and optionally,
(c) 1.0 to 80 weight% of ionically and/or radically polymerizable monomer;
(d) 1.0 to 90 weight% of filler.

17. Use of a composition according to one of Claims 6 to 16 as dental material.

18. Use according to Claim 17 as bond material, cement, filler material or bonding.

## Revendications

1. Méthylènedithiépanesilanes selon la formule (I) : 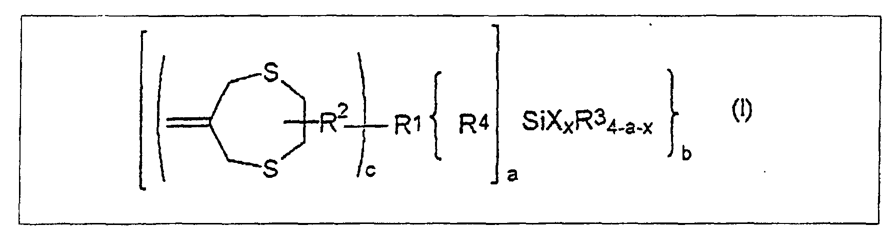 dans laquelle
R¹ = un reste hydrocarbure aliphatique ou alicyclique saturé ou insaturé, avec 1 à 10 atomes de carbone, qui peut être interrompu par un ou plusieurs atomes d'oxygène et/ou de soufre et qui peut contenir un ou plusieurs radicaux ester, carbonyle, amide et/ou uréthanne, ou un reste hydrocarbure aromatique ou hétéroaromatique ayant 6 à 18 atomes de carbone, où les restes hydrocarbures peuvent être substitués ou non substitués ;
R² = l'une des significations données pour R¹ ou absent ;
R³ = l'une des significations données pour R¹ ou absent ;
R⁴ = -(CHR⁶)ₙ-, -Y-CO-NH-(CHR⁶)ₙ-, -Y-CO-NH-R⁵-, -(CHR⁶)ₙ- S-R⁵-, -S-R⁵-, -CO-O-R⁵- ou absent, où n = 1 à 4, R⁶ = hydrogène, alkyle en C₁ à C₁₀ ou aryle en C₆ à C₁₀, R⁵ a l'une des significations indiquées pour R¹ et Y représente un atome O ou S ou absent ; où R⁵ et R⁶ peuvent être substitués ou non substitués ;
X = un radical hydrolysable ;
a, b, c et x sont chaque fois indépendamment l'un de l'autre, 1,2 ou 3 ; où la somme de a + x = 2 à 4.

2. Méthylènedithiépanesilanes selon la revendication 1, dans lesquels :
R¹, R², R³ et/ou R⁶ est un reste hydrocarbure aliphatique ou alicyclique saturé ou insaturé, ayant 1 à 8 atomes de carbone, qui peut être interrompu par des atomes d'oxygène ou de soufre et par des radicaux ester, carbonyle, amide et/ou uréthanne, ou un reste hydrocarbure aromatique ayant 6 à 10 atomes de carbone ;
R⁴ = -(CHR⁶)ₙ-, -Y-CO-NH-(CHR⁶)ₙ-, -Y-CO-NH-R⁵, - S-R⁵, -CO-O-R⁵ ou est absent, où n = 1 à 3, R⁶ = hydrogène ou alkyle en C₁ à C₄, R⁵ a l'une des significations indiquées pour R¹, et Y signifie un atome O ou S ou est absent ;
X = halogène, hydroxy, alkoxy en C₁ à C₃ ou acyloxy en C₁ à C₃ ;
a = 1;
b = 1 ou 2 ;
c = 1 ou 2 ; et/ou
x= 2 ou 3.

3. Méthylènedithiépanesilanes selon la revendication 2, dans lesquels :
R¹ = un reste hydrocarbure aliphatique ou alicyclique, saturé ou insaturé, ayant 1 à 6 atomes de carbone ou un reste hydrocarbure aromatique ayant 6 à 10 atomes de carbone ;
R² = un reste hydrocarbure aliphatique, saturé ou insaturé, ayant 1 à 4 atomes de carbone, qui peut contenir un atome d'oxygène ou un radical ester, ou est absent ;
R³ = un radical méthyle, éthyle et/ou phényle ou est absent ;
R⁴ = -(CH₂)ₙ-, -Y-CO-NH-(CH₂)ₙ-, où n = 1 à 3 et Y représente l'atome O ou est absent ;
X = méthoxy, éthoxy ou chlore.

4. Méthylènedithiépanesilanes selon l'une quelconque des revendications 1 à 3, dans lesquels un ou plusieurs des restes R¹ à R⁶ sont le cas échéant substitués par des radicaux alkyle en C₁-C₁₀, aryle en C₆-C₁₀, halogène, hydroxy, alcoxy, hydroxyalkyle, carboxy, -SO₃H, -PO₃H₂ et/ou -PO₄H₂.

5. Méthylènedithiépanesilanes selon l'une quelconque des revendications 1 à 4, dans lesquels le cycle 1,4-dithiépane est substitué en position 2 ou 3.

6. Composition contenant un polysiloxane à base d'un ou de plusieurs méthylènedithiépanesilanes selon l'une quelconque des revendications 1 à 5, et le cas échéant, un ou plusieurs autres composés condensables de manière hydrolytique.

7. Composition selon la revendication 6, **caractérisée en ce que** l'autre composé condensable de manière hydrolytique est un composé du silicium, de l'aluminium, du zirconium, du titane, du bore, du zinc, du vanadium ou du phosphore.

8. Composition selon la revendication 7, **caractérisée en ce que** l'autre composé condensable de manière hydrolytique est un silane de la formule générale (VI):
R⁷ ₖ(Z'R⁸)ₘSiX'₄₋₍ₖ₊ₘ₎ formule (VI)
dans laquelle
R⁷ représente un radical alkyle en C₁ à C₈, alcényle en C₂ à C₁₂ ou aryle en C₆ à C₁₄;
R⁸ représente un radical alkylène en C₁ à C₈, alcénylène en C₂ à C₁₂ ou arylène en C₆ à C₁₄;
X' représente un atome d'hydrogène ou d'halogène ou un radical alkoxy en C₁ à C₈;
Z' représente un radical glycidyle, acryle, méthacryle, vinyle, allyle ou vinyléther ;
k est 0,1,2 ou 3 ;
m est 0, 1, 2 ou 3 ; et
k+m est 0, 1, 2 ou 3 ;
un composé du zirconium, du titane de la formule (VII) :
MeX "_{y}R⁹ _{z} Formule (VII)
dans laquelle
Me représente Zr ou Ti ;
R⁹ représente un atome d'hydrogène, un radical alkyle en C₁ à C₁₂, alkylaryle en C₁ à C₁₅ ou aryle en C₆ à C₁₄ substitué ou non substitué ;
X" représente un atome d'halogène, un radical hydroxyle ou un radical alkoxy en C₁ à C₈;
y représente 1 à 4 ; et
z est 1 à 3 ;
un composé de l'aluminium selon la formule (VIII):
AlR¹⁰ ₃ Formule (VIII)
dans laquelle
R¹⁰ représente un atome d'halogène, un radical hydroxyle ou alkoxy en C₁ à C₈;
et/ou un trihalogénure de bore, un tétrahalogénure d'étain, un tétraalcoxyde d'étain et/ou un composé du vanadyle.

9. Composition selon la revendication 8, **caractérisée en ce que**
R⁷ = un radical alkyle en C₁ à C₃, alcényle en C₂ à C₅ ou le radical phényle;
R⁸ = un radical alkylène en C₁ à C₅, alcénylène en C₂ à C₅ ou le radical phénylène ;
X' = un atome d'halogène, un radical méthoxy ou éthoxy ;
Z' = un radical acryle ou méthacryle ;
k = 0 ou 1 ;
m = 0 ou 1 ;
k+m = 0, 1 ou 2 ;
et/ou
R⁹ = un radical alkyle en C₁ à C₅ ou le radical phényle ;
X "= un atome d'halogène, le radical méthoxy, éthoxy ou propoxy;
y = 4 ;
z = 0 ou 1, en particulier 0 ;
et/ou
R¹⁰ = un atome d'halogène ou un radical alcoxy en C₁ à C₅.

10. Composition selon la revendication 8 ou 9, **caractérisée en ce que** le polysiloxane contient :
1 à 90% en moles, de préférence 1 à 60% en moles et en particulier 1 à 40% en moles d'un ou de plusieurs silanes selon la formule générale (VI) ou des produits précondensés dérivés de ceux-ci, et/ou
0 à 70% en moles, de préférence 0 à 50% en moles et en particulier 0 à 30% en moles d'un ou de plusieurs composés du zirconium et/ou du titane selon la formule générale (VIT) ou des produits précondensés dérivés de ceux-ci, et/ou
0 à 70% en moles, de préférence 0 à 30% en moles et en particulier 0 à 20% en moles d'un ou de plusieurs composés de l'aluminium selon la formule générale (VIII) ou des produits précondensés dérivés de ceux-ci,
par rapport à la masse totale des composés de formule (I) et/ou des produits précondensés dérivés de ceux-ci, et des composés de formule (VI), formule (VII), ou formule (VII).

11. Composition selon l'une quelconque des revendications 6 à 10, **caractérisée en ce que** le polysiloxane contient, par rapport auxcomposés monomères de départ, 10 à 99% en moles d'un silane selon la formule (I).

12. Composition selon l'une quelconque des revendications 6 à 11, **caractérisée en ce qu'**elle contient en outre un monomère polymérisable de manière ionique et/ou radicalaire.

13. Composition selon la revendication 12, **caractérisée en ce qu'**elle contient un (méth)acrylate de méthyle, d'éthyle, de butyle, de benzyle, de furfuryle et/ou de phényle, di(méth)acrylate de bisphénol A, bis-GMA, UDMA, di(méth)acrylate de di-, tri- ou tétraéthylèneglycol, (méth)acrylate de décanediol, tri(méth)acrylate de triméthylolpropane, tétra(méth)acrylate de pentaérythritol, di(méth)acrylate de butanediol, di(méth)acrylate de 1,10-décanediol ou ldi(méth)acrylate de 1,12-dodécanediol ou un mélange de ces monomères.

14. Composition selon l'une quelconque des revendications 6 à 13, **caractérisée en ce qu'**elle contient en outre une charge.

15. Composition selon l'une quelconque des revendications 6 à 14, **caractérisée en ce qu'**elle contient un initiateur pour la polymérisation radicalaire.

16. Composition selon l'une quelconque des revendications 6 à 15, **caractérisée en ce qu'**elle contient :
(a) 5 à 99,9% en poids d'un polysiloxane, et
(b) 0,1 à 5,0% en poids d'un initiateur de polymérisation, et le cas échéant
(c) 1,0 à 80% en poids d'un monomère polymérisable de manière ionique et/ou radicalaire ;
(d) 1,0 à 90% en poids d'une charge.

17. Utilisation d'une composition selon l'une quelconque des revendications 6 à 16, comme matériau dentaire.

18. Utilisation selon la revendication 17, comme matériau composite, ciment, matériau de remplissage ou adhésif.
